# FASCICULE DE BREVET EUROPEEN

(11) **EP 1 506 910 B1**
(45) Date de publication et mention de la délivrance du brevet: **02.08.2006**
(21) Numéro de dépôt: 04292001.7
(22) Date de dépôt: 05.08.2004
(51) Int. Cl.: B62D 37/02

(54) **Dispositif aérodynamique pour un véhicule automobile et véhicule automobile équipé d'un tel dispositif aérodynamique**
Aerodynamische Vorrichtung für ein Fahrzeug; Fahrzeug mit einer solchen aerodynamischen Vorrichtung
Aerodynamic device for a vehicle; vehicle equipped with such a device

(30) Priorité: 13.08.2003 FR 0309925
(43) Date de publication de la demande: 16.02.2005
(73) Titulaire: Peugeot Citroen Automobiles S.A., 78140 Vélizy Villacoublay (FR)
(72) Inventeur: Aider, Jean-Luc, 75009 Paris (FR); Hillairet, Blandine, 92150 Suresnes (FR)
(74) Mandataire: Lanceplaine, Jean-Claude

(56) Documents cités:
- DE-A- 3 632 033
- DE-A- 3 711 981
- DE-A- 4 036 540
- US-A- 4 836 473
- US-A- 5 636 892
- US-A- 5 734 990
- PATENT ABSTRACTS OF JAPAN vol. 011, no. 397 (M-655), 25 décembre 1987 (1987-12-25) -& JP 62 163875 A (NIPPON DENSO CO LTD), 20 juillet 1987 (1987-07-20)

## Description

La présente invention concerne un dispositif aérodynamique pour un véhicule automobile et également un véhicule automobile équipé d'un tel dispositif aérodynamique.

Les véhicules automobiles, lorsqu'ils roulent, sont soumis à un certain nombre d'efforts qui s'oppose à leur avancement. Ces efforts sont en particulier les frottements solides, c'est à dire les contacts des roues avec le sol, et les frottements aérodynamiques, comme par exemple les frottements de l'air sur les parois de la carrosserie du véhicule.

En plus de ces frottements, les véhicules automobiles sont soumis à une troisième source d'efforts qui s'oppose également à leur avancement. Ces efforts sont les forces aérodynamiques exercées sur le véhicule à travers des régions de surpression et de dépression. En effet, à haute vitesse, ces efforts deviennent dominant par rapport aux autres et jouent un rôle essentiel sur la consommation et la stabilité du véhicule.

Ces forces aérodynamiques sont essentiellement générées par les dépressions créées par les décollements, les recirculations et les tourbillons longitudinaux de l'air. Les recirculations et donc les régions de basse pression sont importantes sur l'arrière du véhicule et particulièrement au niveau de la lunette arrière et du coffre. En effet, les écoulements de l'air à l'arrière des véhicules automobiles sont complexes et, en général, il se produit un équilibre entre les décollements et les tourbillons longitudinaux.

Les dispositifs utilisés en aérodynamique automobile interviennent sur le décollement qui a lieu sur l'arrière du véhicule, en particulier dans la région du raccord entre le pavillon et la lunette arrière, d'une part, et la lunette arrière et le coffre, d'autre part.

Les dispositifs classiques sont essentiellement constitués par des becquets, des ailerons ou des déflecteurs placés dans ces zones à l'arrière du véhicule.

Le becquet est utilisé le plus souvent pour réduire le coefficient de pénétration dans l'air et les autres systèmes sont plutôt utilisés pour réduire la portance.

Le document DE 4036540 décrit un dispositif aérodynamique selon le préambule de la revendication 1, et un véhicule automobile selon le préambule de la revendication 10.

L'invention a pour but de proposer un dispositif aérodynamique qui permet de contrôler les tourbillons longitudinaux et les décollements et d'une manière générale la structure globale de l'écoulement de l'air sur les éléments de la carrosserie d'un véhicule automobile.

Ce but est atteint à l'aide d'un dispositif aérodynamique selon la revendication 1 et à l'aide d'un véhicule automobile selon la revendication 10.

L'invention a donc pour objet un dispositif aérodynamique pour un véhicule automobile, caractérisé en ce qu'il comprend au moins une ligne de générateurs de vortex disposée au moins en amont ou au niveau ou en aval d'au moins une zone tourbillonnaire d'au moins un élément de la carrosserie du véhicule et déplaçable par un ensemble de commande entre une position escamotée et une position déployée en saillie par rapport audit élément de carrosserie pour réduire la traînée et la portance de ce véhicule, la ligne de générateurs de vortex étant portée par une cassette indépendante destinée à être intégrée dans ledit élément de carrosserie et comportant, d'une part, un couvercle muni d'une série de logements pour lesdits générateurs de vortex dans la position escamotée et, d'autre part, un fond formant avec ce couvercle un espace de positionnement de l'ensemble de commande,

Selon d'autres caractéristiques de l'invention :
- chaque générateur de vortex est formé par une ailette perturbatrice d'écoulement dans la position déployée, de petites dimensions et de forme déterminée pour générer des tourbillons en aval de cette ailette,
- l'ailette a la forme d'un parallélogramme dont les côtés ont une longueur comprise entre 2 et 60 mm,
- l'ailette a la forme d'un trapèze de longueur comprise entre 2 et 60 mm et comportant une grande base et une petite base de longueur comprise entre 5 et 40 mm,
- les ailettes de la ligne dans sa position déployée sont inclinées d'un angle variable compris entre 1 et 180°,
- l'angle d'inclinaison des ailettes de la ligne est piloté au moyen de l'ensemble de commande par l'utilisateur du véhicule,
- l'angle d'inclinaison des ailettes de la ligne est piloté au moyen de l'ensemble de commande en fonction d'informations fournies par au moins un capteur de pression et/ou de vitesse et/ou de frottement implanté sur au moins un desdits éléments de carrosserie du véhicule,
- les ailettes de la ligne sont déplaçables au moyen dudit ensemble de commande entre les positions escamotée et déployée dans un freinage d'urgence,
- l'ensemble de commande comprend un axe sur lequel sont fixées, à intervalles réguliers, les ailettes et un moteur électrique entraînant en rotation ledit axe au moyen d'engrenages.

L'invention a aussi pour objet un véhicule automobile, caractérisé en ce qu'il comporte au moins un dispositif aérodynamique tel que précédemment mentionné.

L'invention sera mieux comprise à la lecture de la description qui va suivre, donnée à titre d'exemple et faite en se référant aux dessins annexés, sur lesquels :
- la Fig. 1 est une vue schématique en perspective de l'arrière d'un véhicule automobile équipé d'au moins un dispositif aérodynamique conforme à l'invention,
- la Fig. 2 est une vue schématique à plus grande échelle d'un exemple d'implantation d'un dispositif aérodynamique sur le raccord transversal entre le pavillon et la lunette arrière d'un véhicule automobile,
- la Fig. 3 est une vue schématique en perspective éclatée du dispositif aérodynamique conforme à l'invention,
- la Fig. 4 est une vue schématique en coupe transversale de la cassette du dispositif aérodynamique conforme à l'invention,
- la Fig. 5 est une vue schématique en perspective d'un exemple de réalisation de l'ensemble de commande du dispositif aérodynamique conforme à l'invention,
- les Figs. 6A et 6B sont deux vues schématiques en perspective de deux modes de réalisation d'une ailette du dispositif aérodynamique conforme à l'invention,
- la Fig. 7 est une vue schématique en déviation montrant les tourbillons longitudinaux générés par une ailette du dispositif aérodynamique conforme à l'invention,
- La Fig. 8 est une vue schématique de dessus montrant les tourbillons longitudinaux générés par une ailette du dispositif aérodynamique conforme à l'invention.

Les véhicules automobiles, lorsqu'ils roulent, sont soumis à des efforts qui s'opposent à leur avancement et qui sont les frottements solides, les frottements aérodynamiques et, à haute vitesse, les forces aérodynamiques générées par les dépressions et par les décollements, les recirculations et les tourbillons longitudinaux de l'air.

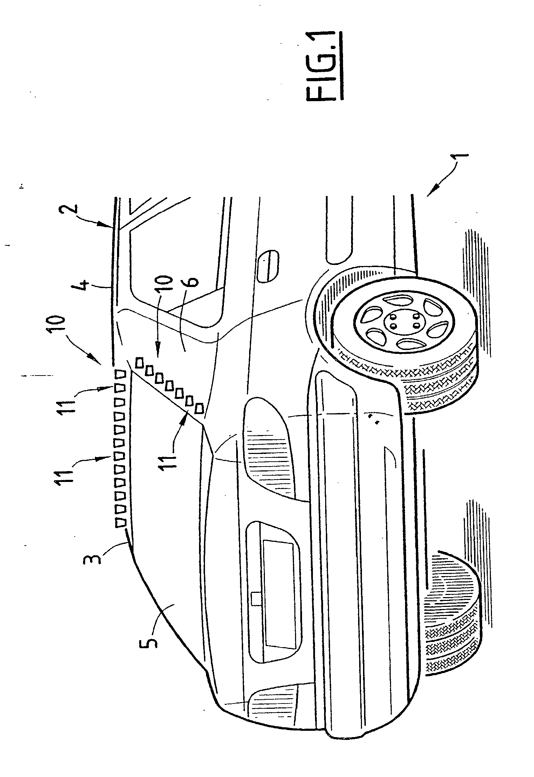

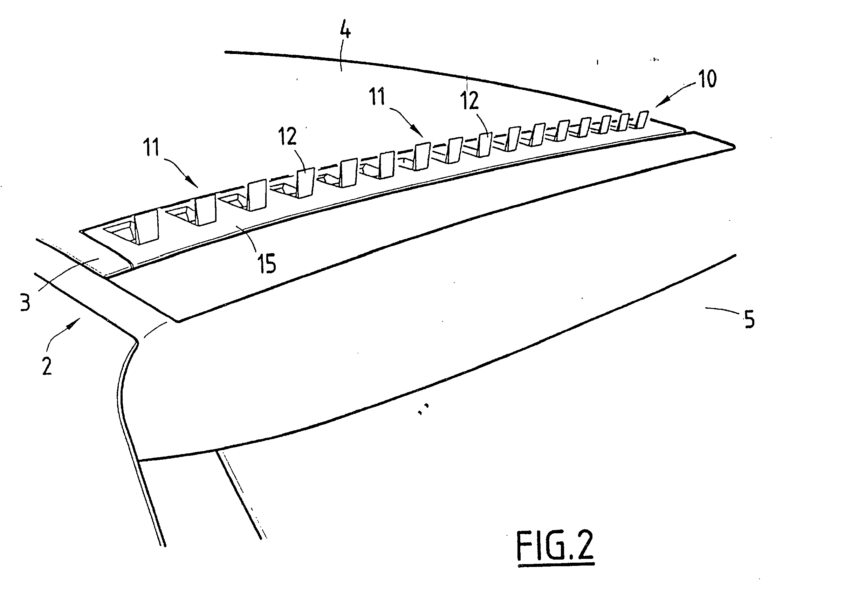

Ainsi, une carrosserie 2 d'un véhicule automobile 1, comme représentée sur les Figs. 1 et 2, comporte des régions de basse pression où ces phénomènes sont particulièrement importants.

Ces zones de la carrosserie 2 du véhicule automobile 1 sont par exemple le raccord transversal 3 entre le pavillon 4 et la lunette arrière 5 et les montants de baie arrière 6, ainsi que montré à la Fig. 1.

Ces zones de la carrosserie sont aussi par exemple les montants de baie avant, le raccord transversal entre le pavillon et le pare-brise, les ailes arrière, les régions entourant les passages de roue avant et/ou les passages de roues arrière et les régions de soubassement entourant les passages de roue avant et/ou arrière.

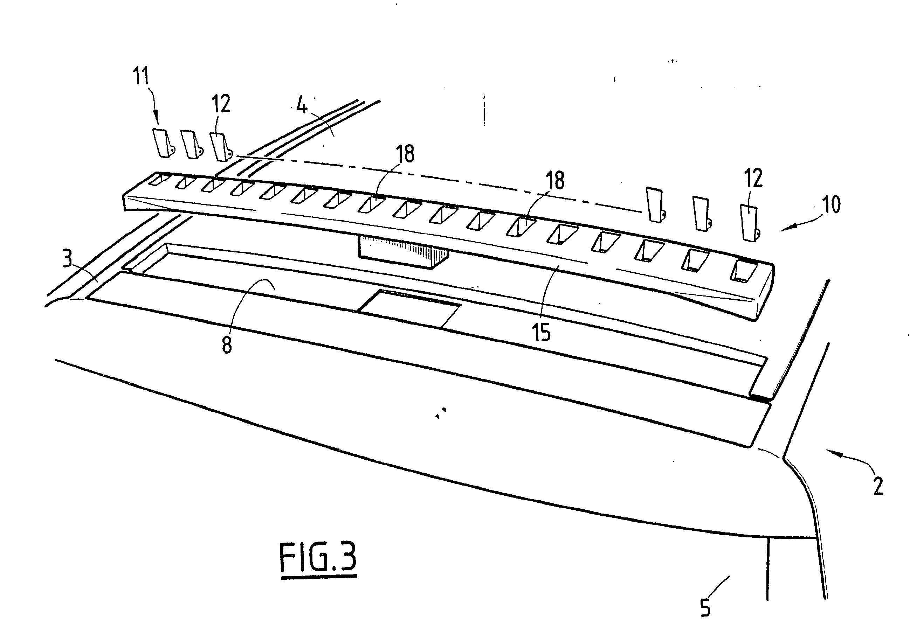

En se reportant aux Figs. 2 et 3, le dispositif aérodynamique selon l'invention est implanté sur le raccord transversal 3 entre le pavillon 4 et la lunette arrière 5. Les dispositifs aérodynamiques implantés sur d'autres zones des éléments de la carrosserie 2 sont identiques.

D'une manière générale, le dispositif aérodynamique comprend au moins une ligne 10 de générateurs de vortex 11 disposée au moins en amont ou au niveau ou en aval de ladite zone tourbillonnaire et cette ligne 10 de générateurs de vortex 11 est déplaçable entre une position escamotée et une position déployée en saillie par rapport au pavillon 4 pour réduire la traînée et la portance de ce véhicule automobile.

Chaque générateur de vortex 11 est formé par une ailette 12 perturbatrice d'écoulement dans la position déployée, comme représenté sur les Figs. 1 et 2, et qui est de petites dimensions et de forme déterminée pour générer des tourbillons en aval de cette ailette 12, comme on le verra ultérieurement.

Ce type d'ailettes est décrit dans la demande de brevet français n° 0305923 du 16 mai 2003 au nom de la Demanderesse.

Chaque générateur de vortex 11 formé par une ailette 12 est porté par une cassette indépendante désignée par la référence 15 sur les Figs. 2 à 4. Cette cassette 15 est disposée dans un logement 8 de forme complémentaire à cette cassette 15 et ménagé dans l'élément de carrosserie destiné à recevoir ladite cassette 15, comme par exemple le raccord transversal 3 entre le pavillon 4 et la lunette arrière 5.

La cassette 15 présente une forme générale parallélépipédique et comporte un couvercle 16 et un fond 17. Le couvercle 16 est muni d'une série de logements 18 ayant chacun une forme complémentaire à une ailette 12 de façon à recevoir les ailettes 12 dans la position escamotée de la ligne 10.

Ainsi, dans la position escamotée, les ailettes 12 sont intégrées dans les logements 18 et, de ce fait, affleurent la surface du couvercle 16 et de l'élément de carrosserie dans lequel la cassette 15 est intégrée.

Le couvercle 16 et le fond 17 de la cassette 15 forment un logement pour un ensemble de commande désigné par la référence générale 20 pour déplacer la ligne 10 des ailettes 12 de la position escamotée vers la position déployée en saillie.

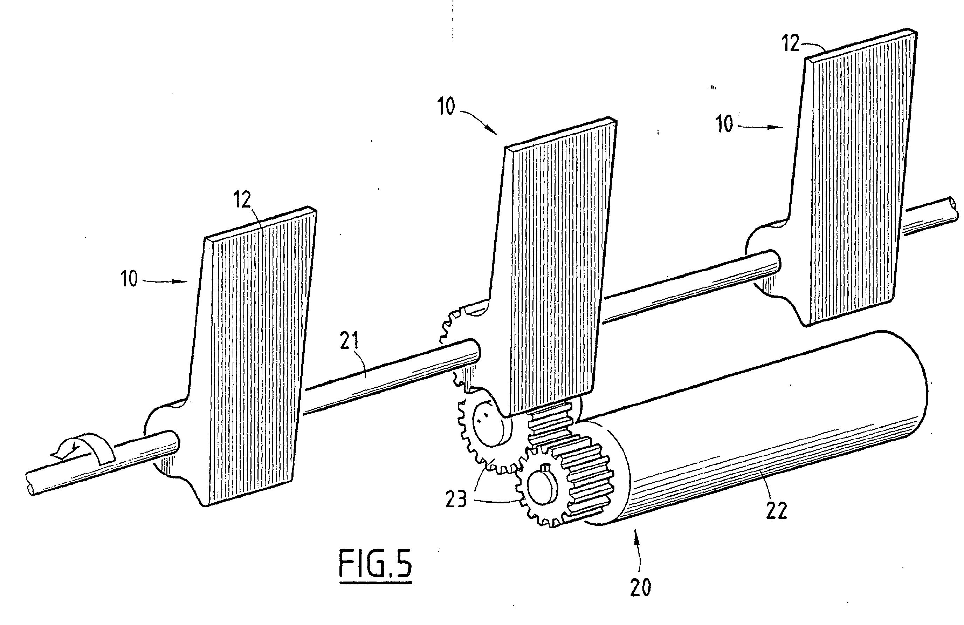

Ainsi que montré à la Fig. 5, cet ensemble de commande 20 est constitué par un axe 21 sur lequel sont fixées, à intervalles réguliers, les ailettes 12 et par un moteur électrique 22 entraînant en rotation ledit axe 21 et par conséquent les ailettes 12 au moyen d'engrenages 23. Le moteur électrique 20 est formé par exemple par un servo-moteur, un moteur pas à pas, un moteur à courant continu ou un moto-réducteur ou tout autre dispositif d'entraînement.

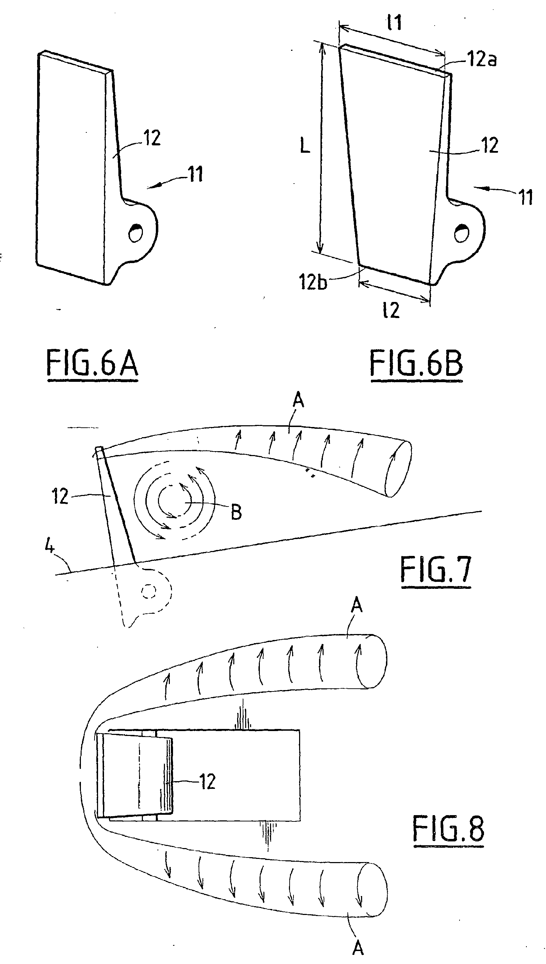

Selon un premier mode de réalisation représenté à la Fig. 6A, chaque ailette 12 a la forme d'un parallélogramme dont les côtés ont une longueur comprise entre 2 et 60 mm.

Selon un second mode de réalisation représenté à la Fig. 6B, chaque ailette 12 a la forme d'un trapèze de longueur "L" comprise entre 2 et 60 mm et comportant une grande base 12a et une petite base 12b de longueur respectivement "I1" et "I2" comprise entre 5 et 40 mm.

D'autres formes pour chaque ailette 12 peuvent être envisagées.

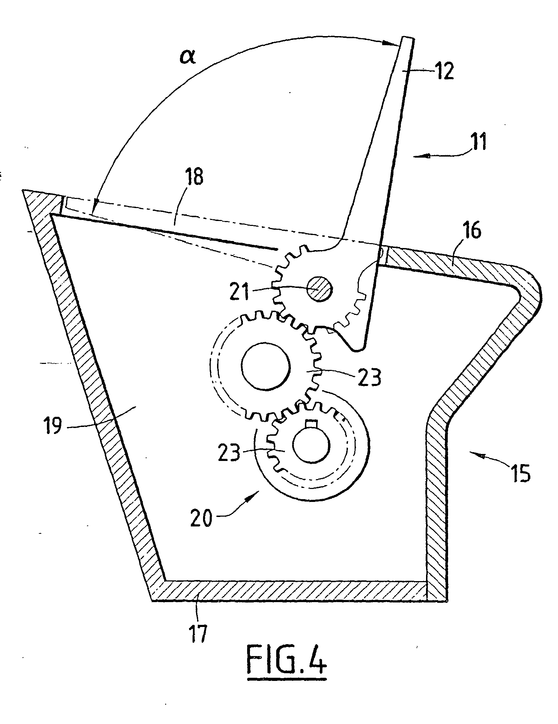

Comme montré à la Fig. 4, ces ailettes 12 de la ligne 10 forment, dans la position déployée de ladite ligne, un angle α avec le couvercle 18 de la cassette 15 qui est compris entre 1 et 180°.

Selon un premier mode de réalisation, l'angle "α" d'inclinaison des ailettes 12 de la ligne 10 est piloté au moyen de l'ensemble de commande 20 par l'utilisateur du véhicule.

Selon un deuxième mode de réalisation, l'angle "α" d'inclinaison des ailettes 12 de la ligne 10 est piloté au moyen de l'ensemble de commande 20 en fonction d'informations fournies par au moins un capteur, non représenté, de pression et/ou de vitesse et/ou de frottement implanté sur au moins un des éléments de la carrosserie du véhicule automobile.

La vitesse à laquelle les ailettes 12 de la ligne 10 pivotent en position déployée peut être choisie arbitrairement à une valeur déterminée.

Selon un troisième mode de réalisation, les ailettes 12 de la ligne 10 sont déplaçables au moyen de l'ensemble de commande 20 entre les positions escamotées et déployées, par exemple lors d'un freinage d'urgence.

Ainsi, l'ensemble de commande 20 est activé très rapidement de façon à améliorer la portance arrière du véhicule et à aider le conducteur à garder le contrôle de ce véhicule.

Enfin, l'angle "α" d'inclinaison des ailettes 12 de la ligne 10 peut être piloté à chaque instant par l'ensemble de commande 20 en fonction de la vitesse du véhicule.

Cet ensemble de commande 20 est suffisamment robuste pour supporter les efforts aérodynamiques exercés sur les ailettes par l'écoulement et aussi permettre la réintégration de ces ailettes dans la cassette même lorsque le véhicule roule à haute vitesse. Il présente aussi une dynamique rapide de façon à pouvoir utiliser les ailettes dans une boucle d'asservissement.

Chaque ailette 12 perturbatrice d'écoulement présente donc une forme déterminée qui génère des tourbillons A en aval de cette ailette 12, comme montré aux Fig. 7 et 8, ce qui permet de réduire la traînée et la portance du véhicule automobile, qu'il soit monospace, bi-corps ou tri-corps. Derrière chaque ailette 12, il se produit également une zone de recirculation B. Ces ailettes perturbent les structures tourbillonnaires générées autour des éléments de carrosserie du véhicule automobile.

Enfin, le dispositif aérodynamique selon l'invention présente l'avantage d'avoir un faible encombrement afin de faciliter son intégration dans un véhicule automobile de série et présente un prix de revient faible.

## Revendications

1. Dispositif aérodynamique pour un véhicule automobile, ledit dispositif aérodynamique comprenant au moins une ligne (10) de générateurs de vortex (11) pouvant être disposée au moins en amont ou au niveau ou en aval d'au moins une zone tourbillonnaire d'au moins un élément (4, 5, 6) de la carrosserie (2) du véhicule, ladite au moins une ligne de générateurs de vortex étant déplaçable par un ensemble de commande (20) entre une position escamotée et une position déployée en saillie par rapport audit élément de carrosserie pour réduire la traînée et la portance de ce véhicule, **caractérisé en ce que** le dispositif aérodynamique comprend en outre une cassette indépendante (15), la ligne (10) de générateurs de vortex (11) étant portée par ladite cassette (15) indépendante et ladite cassette (15) indépendante étant destinée à être intégrée dans ledit élément de carrosserie et comportant, d'une part, un couvercle (16) muni d'une série de logements (18) pour lesdits générateurs de vortex (11) dans la position escamotée et, d'autre part, un fond (17) formant avec le couvercle (15) un espace (19) de logement de l'ensemble de commande (20).

2. Dispositif aérodynamique selon la revendication 1, **caractérisé en ce que** chaque générateur de vortex (11) est formé par une ailette (12) perturbatrice d'écoulement dans la position déployée, de petites dimensions et de forme déterminée pour générer des tourbillons en aval de cette ailette (12).

3. Dispositif aérodynamique selon la revendication 1 ou 2, **caractérisé en ce que** l'ailette (12) a la forme d'un parallélogramme dont les côtés ont une longueur comprise entre 2 et 60 mm.

4. Dispositif aérodynamique selon la revendication 1 ou 2, **caractérisé en ce que** l'ailette (12) a la forme d'un trapèze de longueur comprise entre 2 et 60 mm et comportant une grande base et une petite base de longueur comprise entre 5 et 40 mm.

5. Dispositif aérodynamique selon l'une quelconque des revendications 1 à 4, **caractérisé en ce que** les ailettes (12) de la ligne (10) dans sa position déployée sont inclinées d'un angle variable compris entre 1 et 120°.

6. Dispositif aérodynamique selon l'une quelconque des revendications 1 à 5, **caractérisé en ce que** l'angle d'inclinaison des ailettes (12) de la ligne (10) peut être piloté au moyen de l'ensemble de commande (20) par l'utilisateur du véhicule.

7. Dispositif aérodynamique selon l'une quelconque des revendications 1 à 5, **caractérisé en ce que** l'angle d'inclinaison des ailettes (12) de la ligne (10) peut être piloté au moyen de l'ensemble de commande (20) en fonction d'informations fournies par au moins un capteur de pression et/ou de vitesse et/ou de frottement implanté sur au moins un desdits éléments de la carrosserie du véhicule.

8. Dispositif aérodynamique selon l'une quelconque des revendications 1 à 7, **caractérisé en ce que** les ailettes (12) de la ligne (10) sont déplaçables au moyen dudit ensemble de commande (20) entre les positions escamotée et déployée lors d'un freinage d'urgence.

9. Dispositif aérodynamique selon l'une quelconque des revendications 1 à 8, **caractérisé en ce que** l'ensemble de commande (20) comprend un axe (21) sur lequel sont fixés, à intervalles réguliers, les ailettes (12) et un moteur électrique (22) entraînant en rotation ledit axe (21) au moyen d'engrenages (23).

10. Véhicule automobile, **caractérisé en ce qu**'il comporte au moins un dispositif aérodynamique (10) selon l'une quelconque des revendications précédentes.

## Claims

1. Aerodynamic device for an automotive vehicle, said aerodynamic device comprising at least one line (10) of vortex generators (11) which are able to be disposed at least upstream of or level with or downstream of at least one turbulence zone of at least one element (4, 5, 6) of the bodywork (2) of the vehicle, said at least one line of vortex generators being displaceable by a control assembly (20) between a retracted position and a deployed position projecting relative to said bodywork element in order to reduce the drag and the lift of this vehicle, **characterised in that** the aerodynamic device furthermore comprises an independent cassette, the line (10) of vortex generators (11) being carried by said independent cassette (15) and said independent cassette (15) being intended to be integrated into said bodywork element and comprising, on the one hand, a cover (16) which is provided with a series of housings (18) for said vortex generators (11) in the retracted position and, on the other hand, a base (17) forming, with the cover (15), a space (19) for housing the control assembly (20).

2. Aerodynamic device according to claim 1, **characterised in that** each vortex generator (11) is formed by a blade (12) for disturbing the flow in the deployed position, with small dimensions and a specific shape for generating turbulences downstream of this blade (12).

3. Aerodynamic device according to claim 1 or 2, **characterised in that** the blade (12) has the shape of a parallelogram, the sides of which have a length between 2 and 60 mm.

4. Aerodynamic device according to claim 1 or 2, **characterised in that** the blade (12) has the shape of a trapezoid with a length between 2 and 60 mm and comprising a large base and a small base with a length between 5 and 40 mm.

5. Aerodynamic device according to any of the claims 1 to 4. **characterised in that** the blades (12) of the line (10) in its deployed position are inclined at a variable angle of between 1 and 120°.

6. Aerodynamic device according to any of the claims 1 to 5, **characterised in that** the angle of inclination of the blades (12) of the line (10) can be controlled by the user of the vehicle by means of the control assembly (20).

7. Aerodynamic device according to any of the claims 1 to 5, **characterised in that** the angle of inclination of the blades (12) of the line (10) can be controlled by means of the control assembly (20) as a function of data supplied by at least one pressure and/or speed and/or friction sensor introduced into at least one of said bodywork elements of the vehicle.

8. Aerodynamic device according to any of the claims 1 to 7, **characterised in that** the blades (12) of the line (10) are displaceable by means of said control assembly (20) between the retracted and deployed positions during emergency braking.

9. Aerodynamic device according to any of the claims 1 to 8, **characterised in that** the control assembly (20) comprises an axle (21) on which there are fixed, at regular intervals, the blades (12) and an electric motor (22) which actuates said axle (21) in rotation by means of gears (23).

10. Automotive vehicle, **characterised in that** it comprises at least one aerodynamic device (10) according to any of the preceding claims.

## Patentansprüche

1. Aerodynamische Vorrichtung für ein Kraftfahrzeug, welche aerodynamische Vorrichtung wenigstens eine Reihe (10) von Wirbelerzeugern (11) umfasst, die wenigstens oberhalb oder auf gleicher Höhe oder unterhalb wenigstens eines Wirbelbereiches wenigstens eines Elementes (4, 5, 6) der Karosserie (2) des Fahrzeuges angebracht werden können, welche wenigstens eine Reihe von Wirbelerzeugern über eine Steueranordnung (20) zwischen einer eingezogenen Position und einer ausgefahrenen Position, in der sie bezüglich des besagten Karosserieelementes vorstehen, versetzbar ist, um den Luftwiderstand und den Auftrieb des Fahrzeuges herabzusetzen, **dadurch gekennzeichnet, dass** die aerodynamische Vorrichtung weiterhin eine separate Kassette umfasst, die Reihe (10) der Wirbelerzeuger (11) von der besagten separaten Kassette (15) gehalten ist, und die besagte separate Kassette (15) dazu ausgelegt ist, in das besagte Karosserieelement integriert zu werden, und einerseits einen Deckel (16), der mit einer Reihe von Aufnahmen (18) für die besagten Wirbelerzeuger (11) in der ausgefahrenen Position versehen ist, und andererseits einen Boden (17) umfasst, der mit dem Deckel (15) einen Raum (19) zur Aufnahme der Steueranordnung (20) bildet.

2. Aerodynamische Vorrichtung nach Anspruch 1, **dadurch gekennzeichnet, dass** jeder Wirbelerzeuger (11) aus einem die Strömung in der ausgefahrenen Position störenden Flügel (12) mit kleinen Abmessungen und einer bestimmten Form zum Erzeugen von Wirbeln unterhalb des Flügels (12) besteht.

3. Aerodynamische Vorrichtung nach Anspruch 1 oder 2, **dadurch gekennzeichnet, dass** der Flügel (12) die Form eines Parallelogramms hat, dessen Seiten eine Länge zwischen 2 und 60 mm haben.

4. Aerodynamische Vorrichtung nach Anspruch 1 oder 2, **dadurch gekennzeichnet, dass** der Flügel (12) die Form eines Trapezes mit einer Höhe zwischen 2 und 60 mm und einer großen Basis und einer kleinen Basis mit einer Länge zwischen 5 und 40 mm hat.

5. Aerodynamische Vorrichtung nach einem der Ansprüche 1 bis 4, **dadurch gekennzeichnet, dass** die Flügel (12) der Reihe (10) in der ausgefahrenen Position schräg unter einem variablen Winkel zwischen 1 und 120° angeordnet sind.

6. Aerodynamische Vorrichtung nach einem der Ansprüche 1 bis 5, **dadurch gekennzeichnet, dass** der Schrägwinkel der Flügel (12) der Reihe (10) über die Steueranordnung (20) durch den Fahrer des Fahrzeuges gesteuert werden kann.

7. Aerodynamische Vorrichtung nach einem der Ansprüche 1 bis 5, **dadurch gekennzeichnet, dass** der Schrägwinkel der Flügel (12) der Reihe (10) über die Steueranordnung (20) in Abhängigkeit von Informationen gesteuert werden kann, die von wenigstens einem Druckmessfühler und/oder Geschwindigkeitsmessfühler und/oder Reibungsmessfühler kommen, die an wenigstens einem der besagten Karosserieelemente des Fahrzeuges eingebaut sind.

8. Aerodynamische Vorrichtung nach einem der Ansprüche 1 bis 7, **dadurch gekennzeichnet, dass** die Flügel (12) der Reihe (10) mittels der besagten Steueranordnung (20) zwischen eingezogenen und ausgefahrenen Positionen bei einer Gewaltbremsung versetzbar sind.

9. Aerodynamische Vorrichtung nach einem der Ansprüche 1 bis 8, **dadurch gekennzeichnet, dass** die Steueranordnung (20) eine Achse (21), an der in regelmäßigen Abständen die Flügel (12) befestigt sind, und einen Elektromotor (20) umfasst, der die Achse (21) über ein Getriebe (23) dreht.

10. Kraftfahrzeug, **dadurch gekennzeichnet, dass** es wenigstens eine aerodynamische Vorrichtung (10) gemäß eines der vorhergehenden Ansprüche aufweist.
